# EUROPÄISCHE PATENTANMELDUNG

(11) **EP 1 748 263 A1**
(43) Veröffentlichungstag der Anmeldung: **31.01.2007**
(21) Anmeldenummer: 06015466.3
(22) Anmeldetag: 25.07.2006
(51) Int. Cl.: F24F 11/00, F24F 12/00

(54) **Verfahren zur Minderung der Gefährdung durch gefährliche Gase in Aufenthaltsräumen mit einem Lüftungsgerät**

(30) Priorität: 26.07.2005 DE 102005035496
(71) Anmelder: Horn, Wolfgang, Dr.- Ing., 08301 Bad Schlema (DE)
(72) Erfinder: Horn, Wolfgang, Dr.- Ing., 08301 Bad Schlema (DE)
(74) Vertreter: Findeisen Hübner Neumann Seerig

(57) **Zusammenfassung**

Die Erfindung betrifft ein Verfahren zur Minderung der Gefährdung durch gefährliche Gase in Aufenthaltsräumen mit einem Lüftungsgerät.

Der Erfindung liegt die Aufgabe zugrunde, ein Verfahren zur Minderung der Gefährdung durch gefährliche Gase in Aufenthaltsräumen mit einem Lüftungsgerät zu entwickeln, bei dem die Bedingungen für Wärmerückgewinnungsgeräte planmäßig so ausgestaltet werden können, dass deren vorteilhaften Eigenschaften bei ihrem künftigen Einsatz gewahrt bleiben und ein ausreichender Schutz vor gefährlichen Gasen unter Berücksichtigung hygienischer und ökonomischer Anforderungen erfüllt wird.

Erfindungsgemäß wird die Aufgabe dadurch gelöst, dass ein Wärmerückgewinnungsgerät mit hoher Rückwärmezahl gewählt wird, Objekt-, Nutzungs- und Standorteinflüsse auf die Belastung erfasst werden, der Zufluss pro Zeiteinheit der gefährlichen Gase ermittelt wird, für einen Zielwert der Gaskonzentration bei Vorgabe der Luftwechselrate mit einem Berechnungsmodell vorrangig der lüftungstechnische Schutz auf Basis der normalen bautechnischen Grundsubstanz und ohne nachteilige Nebenwirkungen optimiert wird.

## Beschreibung

Die Erfindung betrifft ein Verfahren zur Minderung der Gefährdung durch gefährliche Gase in Aufenthaltsräumen mit einem Lüftungsgerät.

Seit Anfang der 90er Jahre der konvektive Radonzufluss aus dem Baugrund als wesentliche Radonbelastungsquelle für Gebäude erkannt wurde, orientieren sich die Schutzmaßnahmen an der Höhe der Radonkonzentration im Baugrund. Eigens dazu wurden in mehreren Ländern Karten über die Radonkonzentration im Baugrund erarbeitet (Radon-Mandbuch Deutschland, 2001. Bundesministerium für Umwelt, Naturschutz und Reaktorsicherheit. Wirtschaftsverlag NW, Verlag für neue Wissenschaft GmbH. Postfach, 101110, 27511 Bremerhaven).

Mit der wachsenden Kenntnis über die schädlichen Auswirkungen des radioaktiven Edelgases Radon gibt die WHO seit dem Jahr 2000 vor, dass 100 Bq/m³ als Zielwert anzustreben sind; besser noch: als Besfwert sind 50 Bq/m³ zu erreichen (World Health Organisation (2000) Air qualitiy guidlines for Europe, 2nd edn. WHO Regional Publications, European Series No. 91 WHO, Regional Office for Europe Copenhagen). Mit dieser deutlich anspruchsvolleren Zielstellung gegenüber bisherigen Vorgaben z. B. Empfehlung der Europäischen Kommission: 200 Bq/m³ für Neubauten, 400 Bq/m³ für bestehende Gebäude (Empfehlung 90/143/Euratom der Kommission vom 21.02.1990 zum Schutz der Bevölkerung vor Radonexposition innerhalb von Gebäude. Amtsblatt der EG Nr. L 80/26 vom 27.03.1990) kann nicht mehr nur der Baugrund als dominierende oder gar alleinige Radonquelle für die Radonkonzentration in den Räumen zugrunde gelegt werden.

### Alle Radonquellen sind zu beachten:

Außenluft: Sie kann für Deutschland im Mittel zu 14 Bq/m³ angesetzt werden (Die Exposition durch Radon und seine Zerfallsprodukte in Wohnungen in der Bundesrepublik Deutschland und deren Bewertung. Veröffentlichung der Strahlenschutzkommission, Band 19. Herausgegeben vom Bundesministerium für Umwelt, Naturschutz und Reaktorsicherheit. Gustav Fischer Verlag Stuttgart · Jena · New York ·1992). Je nach Gebietslage können die Werte merklich abweichen (Flachland, Bergland, Tallagen).

Boden, Baugrund: Die bisherigen Einteilungen zur Radongefährdung bzw. zum erforderlichen Radonschutz orientieren sich an den gemessenen Radonkonzentrationen im Boden und teilweise auch an der aufgetretenen Radonkonzentration in den Gebäuden. Naturgemäß ergeben sich trotz gesicherter Abhängigkeiten eine enorme Bandbreite und somit keine sichere Zuordnung auf das jeweilige Grundstück. Zur Verbesserung der Aussagekraft können weitere Einflussfaktoren berücksichtigt werden: Durchlässigkeit des Baugrundes, Feuchte, Messtiefe usw. (Leitfaden zur Messung von Radon, Thoron und ihren Zerfallsprodukten. Veröffentlichung der Strahlenschutzkommission, Bd. 47. Herausgegeben vom Bundesministerium für Umwelt, Naturschutz und Reaktorsicherheit. Urban & Fischer München Jena. 1992).

### Baumaterialien:

Auf sie richteten sich vor 1990 die Radonuntersuchungen, sie verloren später mit der Kenntnis der dominierenden Konvektion von Radonluft aus dem Baugrund an Bedeutung. Gründe: Bei höheren Zielwerten der zulässigen Radonkonzentration ist ihr Anteil vernachlässigbar. Die Exhalationsraten aus den Baumaterialien sind wegen unzureichender Messtechnik bzw. Messmethodik meist sehr niedrig ermittelt worden, was leicht zu falscher Bewertung führt. Je nach Art und Masse des Baumaterials, der Raumgeometrie und zunehmend niedrigen Luftwechselraten können 100 und auch 200 Bq/m³ alleine durch den Einfluss von Baustoffen überschritten werden.

### Wasser:

Dieser Anteil ist in Wohnräumen noch am ehesten vernachlässigbar und ist meist zeitlich begrenzt (z. B. Duschen im Baderaum).

### Radonschutz

Radonschutz kann mit verschiedenen Maßnahmen erreicht werden. Dazu gehören:
a) Funktionslösungen
   Prinzip: Radon kommt durch räumliche Trennung nicht in genutzte Räume;
   - Entkopplung des Gebäudes vom Erdreich (z.B. durch Tiefgarage),
   - untergeordnete Räume im Keller- oder Untergeschoss,
   - Räume mit langer Aufenthaltszeit wie Kinder-, Schlafzimmer sind im Obergeschoss angeordnet.
b) bautechnische Schutzmaßnahmen
   Prinzip: Radon wird durch passiv wirkende Materialien abgeschirmt (z.B. Dichtbahnen);
   - Einbau von Abdichtungen in der Gründungsebene,
   - Verwendung von Materialien mit geringer Radonfreisetzung wie Holz.
c) lüftungstechnische Schutzmaßnahmen
   Prinzip: Radon wird aktiv durch Luft verdünnt bzw. weggetragen.
   - Unterlüften des Fußbodens/ der Bodenplatte durch Absaugen der Luft im Boden (Unterdruck soll den Eintritt von Bodenluft ins Gebäude verhindern),
   - Durchlüften im Fußbodenaufbau mit Luft führenden Schichten.

Die Schutzmaßnahmen a), b) und c) können einzeln oder in Kombination angewandt werden. Jede Schutzmaßnahme hat folgende Anforderungen zu erfüllen:
Sichere und dauerhafte Wirksamkeit
Keine nachteiligen Nebenwirkungen
Vertretbare Kosten.

### Radonschutz durch Lüftung

Die Zielstellung mit Lüftungsanlagen in Gebäuden ist insbesondere: Für die anwesenden Personen ist zuverlässig und komfortabel im Aufenthaltsraum zur Aufenthaltszeit die hygienisch erforderliche Luftmenge bereitzustellen. Dabei besteht wegen der Energiekosten ein Minimierungsgebot für die auszutauschende Luftmenge. Dieses Minimieren bis auf die hygienisch erforderliche Mindestluftmenge führt wie bei ungenügender Fensterlüftung zu sinkendem Luftaustausch mit ansteigenden Schadstoffkonzentrationen. Damit besteht ein Zielkonflikt. Die Erfüllung aller Anforderungen erfordert spezielles Fachwissen und ist mit Kosten verbunden. Noch schwieriger wird es, wenn dazu Radonschutz zu gewährleisten ist.

Vielfach wird bei hohen Radonmesswerten empfohlen: Durch häufigeres Lüften könne problemlos und ohne kostspielige Baumaßnahmen die Radonkonzentration gesenkt werden. Genau genommen stellt dies aber keine vorbeugende Schutzmaßnahme dar, sondern es ist bestenfalls eine nachträgliche Minderung der Radonkonzentration mit unsicherem bzw. äußerst fraglichem Ergebnis. Für eine Minderung der Radonkonzentration kann dies vorübergehend unter Umständen erwogen werden, bis planmäßig sicherer Schutz vorgenommen werden kann. Probleme sind u. a.:
Wer kann beurteilen, wie lange und wie oft "häufiger gelüftet" werden muss? In Münzenberg U., Thumulla J.(Anwendungsmöglichkeiten von Blower-Door-Untersuchungen. In: 10. BlowerDoor-Symposium des e'u'[z']. 17.06.2005 in Hannover-Laatzen. Energie- und Umweltzentrum a Deister.31832 Springe-Eldagsen. S. 90-97.) wird berichtet, "dass trotz täglich viermaliger Stoßbelüftung Schimmelpilzschäden auftreten". Verfärbungen und Gerüche infolge Schimmelpilzbefalls kann man sehen bzw. riechen. Radon hingegen können wir mit unseren Sinnesorganen nicht wahrnehmen.
Wie hoch sind die zusätzlichen Kosten für entgangene Lüftungswärme?
Sind bautechnische Schutzmaßnahmen auf Dauer im Vergleich dazu preiswerter?
Insbesondere nachts können Fenster nicht ohne weiteres geöffnet werden (Einbruchgefahr, Lärm).

Radonschutz mit lüftungstechnischen Maßnahmen ist somit problematisch und kann zu unerwünschten Folgeerscheinungen führen, die letztlich nachteilig, schädlich bzw. sogar gefährlich sein können. Dann kann nicht mehr von Schutzmaßnahmen gesprochen werden, sondern es muss vielmehr vor Gefährdungsmaßnahmen gewarnt werden.

Nachteile bzw. Schäden durch Lüftungsmaßnahmen können auftreten, indem z. B. der Baugrund unter der Bodenplatte bei Unterlüftung Feuchtigkeit verliert, mehr oder weniger austrocknet und sich infolge Schrumpfen Setzungsrisse einstellen. Aufgetretene Schadensfälle mit kostspieliger Sanierung sind die Folge: z. B. etliche Zentimeter abgesenkte, vielfach gerissene Bodenplatte und damit nicht mehr nutzbare Geschäftsräume in Einkaufsmarkt (Horn: Persönliche Information; Ort im Kreis Aue/Schwarzenberg, nähere Auskunft nur über Geschäftsinhaber). Bei Lüftung mit Überdruck bildet sich Kondenswasser im Schichtenaufbau. Es bedarf keines Überdruckes, es genügt schon, wenn allein durch mitgeführte feucht-warme Luft in einer Dachgeschosswohnung auf der Leeseite des Gebäudes in kalte Dachbereiche einströmt und irgendwann, evt. schon nach einem Jahr oder erst nach Jahrzehnten Eiszapfen und die entsprechenden Schadensfolgen eintreten.( Lamers R.: Fallbeispiele - Bauschäden durch mangelhafte Luftdichtheit. In: 10. BlowerDoor-Symposium des eu [z]. 17.06.2005 in Hannover-Laatzen. Energie- und Umweltzentrum a Deister.31832 Springe-Eldagsen. S. 34-35.), die Wärmeverluste mit höherer Luftwechselrate zu kostenintensiv werden oder im Winter, wenn höhere Radonkonzentrationen anliegen, durch die kühle Außenluft die Luftfeuchtigkeit im Raum sinkt, zu trocken wird und zu Reizungen der Augen und Nasenschleimhäute führt. (Sambale M., Hanser H., Schnurr J., Prill K.: Das eza!-haus-Betriebserfahrungen eines mit Passivhaustechnik sanierten Gebäudes. In: Tagungsband 9. Internationale Passivhaustagung 29.(30.05.2005 in Ludwigshafen. Passivhaus Institut, Darmstadt 2005. Seite 185-192.; Paul E.: Häufig festgestellte Mängel an Lüftungsanlagen und Lösungsvorschlägen. In: Tagungsband 9. Internationale Passivhaustagung 29.(30.05.2005 in Ludwigshafen. Passivhaus Institut, Darmstadt 2005. Seite 249-256; Bemdgen-Kaiser A.: Geförderte Passivhaus-Projekte in NRW. In: Tagungsband 9. Internationale Passivhaustagung 29.(30.05.2005 in Ludwigshafen. Passivhaus Institut, Darmstadt 2005. Seite 411-422).

Eine bedenkenlose natürliche Unterlüftung in der kapillarbrechenden Schicht gemäß (a) bzw. künstlicher Überdruck (sofern überhaupt ständig machbar) gemäß (b), wie im Radonhandbuch (Gesetz zum Schutz vor Radon beim Aufenthalt in Gebäuden. Entwurf zum Radonschutzgesetz vom 15.06.04) Blatt 4-6 bzw. Blatt 4-27 dargestellt, kann somit keinesfalls empfohlen werden. Diese Schutzmaßnahmen widersprechen den Regeln der Baukunst.

### Radonschutz mit Wärmerückgewinnungsgerä:

Wärmerückgewinnungsgeräte haben gegenüber üblichen Lüftungsanlagen ein höheres technisches und Qualitätsniveau und können effektiver eingesetzt werden. Sie sind teurer und werden in der Praxis nicht "selbstverständlich" eingebaut. Es verbietet sich hierbei, ein hochwertiges teures Produkt für den Radonschutz unbedacht einzusetzen. Sicher auch aus diesem Grund konnte bis jetzt noch keine Information über eine gezielte, planmäßige Praxisanwendung von Wärmerückgewinnungsgeräten für Radonschutz gefunden werden.

Damit stellen sich wieder wie oben Fragen:
Woher will der Nutzer wissen, um wie viel stärker gelüftet werden muss?
Wie hoch werden bei höherer Luftwechsetrate die zusätzlichen Kosten bzw. wie sinkt die Effizienz des Wärmerückgewinnungsgerätes?
Sind bautechnische Radonschutzmaßnahmen auf Dauer im Vergleich dazu billiger?
Die oben genannten Forderungen zur dauerhaften Wirksamkeit, zu fehlenden Nebenwirkungen und zu vertretbaren Kosten werden infrage gestellt.
Es wurde bereits vorgeschlagen (DE 102005018911.3-34), dass durch Messung der Radonkonzentration die Lüftungsintensität automatisch oder manuell geregelt werden kann. Damit kann nachträglich nach Kenntnis der gemessenen Radonkonzentration und der Lüftungsintensität die Luftmenge neu eingestellt werden. Damit kann die erste Frage beantwortet werden, ob stärker zu lüften wäre. Falls das Wärmerückgewinnungsanlage dazu nicht mehr über ausreichende Reserven verfügt, hat man zwar darüber Kenntnis, hat aber mit ihr keine Handlungsmöglichkeit mehr.

### Folgender Sachstand ist zu beachten:

Die Wärmeschutzverordnung von 1995 (Wärmeschutzverordnung, BGBI. I Nr. 55, herausgegeben zu Bonn 24.08.1994) gab für die Auslegung der Heizungsanlage eine Luftwechselrate von n = 0,8 h⁻¹ vor. Mit der Energieeinsparverordnung (Energieeinsparverordnung. BGBI. I S. 3146, 02.12.04) ist bei nicht auf Dichtheit geprüften Häusern eine Luftwechselrate von n = 0,7 h⁻¹, bei geprüften Häusern von n = 0,6 h⁻¹ anzusetzen. Mit Wärmerückgewinnungsgeräten wird vielfach für die weitere Berechnung und Geräteauslegung eine Luftwechselrate von n = 0,4 h⁻¹ bzw. 0,3 h⁻¹ angesetzt.

Wenn der hygienische Mindestluftwechsel zugrunde gelegt wird, können für eine Wohnung recht unterschiedliche Situationen von z. B. 4-köpfige Familie (Eltern mit 2 Kindern) oder Single-Haushalt vorliegen. Bei einer Wohnung mit 120 m² Nutzfläche, einer Raumhöhe von rd. 2,7 m, einem Luftbedarf pro Person von 20 m³/h ergibt sich dann eine Mindestluftwechselrate von n = 0,25 h⁻¹ bzw. nur 0,06 h⁻¹.

Es wird eine Wärmerückgewinnungsanlage mit einer üblichen mittleren Rückwärmezahl von im Mittel etwa 70% (für Kreuzstrom-Plattenwärmetauscher 50 - 70%, Gegenstrom-Plattenwärmetauscher 60 - 75%) und einer Luftwechselrate von n = 0,3 h⁻¹ mit Investitionskosten von ca. 5.000 € angenommen. Wegen gemessener bzw. zu erwartender höherer Radonkonzentrationen bietet sich an, die Luftwechselrate zu erhöhen, beispielsweise zu verdoppeln auf n = 0,6 h⁻¹ bzw. verdreifachen auf n = 0,9 h⁻¹.

Dies ist immer noch weniger als empfohlene Luftwechselraten von n = 1,0 h⁻¹ bzw. sogar n >2 h⁻¹. Bei 2- bzw. 3facher Luftwechselrate sinkt die Rückwärmezahl auf 49% bzw. sogar 34% (0,70² = 0,49 bzw. 0,70³= 0,34). Der Nutzer wird nicht erfreut sein, wenn die Rückwärmezahl derart sinkt, die Anlage wird unwirtschaftlich.

Bei höherer Luftwechselrate muss weiterhin beachtet werden, dass die Filter öfter zu erneuern sind, nunmehr hörbare Geräusche entstehen können, der Stromverbrauch ansteigt, evtl. sogar ein größeres und teureres Gerät auszuwählen ist. Schlimmstenfalls wäre das bisherige Gerät unterdimensioniert und es liegt damit eine Fehlinvestition vor.

Selbst bei Nutzung eines Wärmerückgewinnungsgerätes mit einer Rückwärmezahl über 90% ist es offen, ob bzw. wie es sinnvoll eingesetzt werden kann: siehe obige Fragen 1 a bis 3a. Eine pauschale Empfehlung, die Radonkonzentration mit Lüftungs- bzw. Wärmerüdcgewinnungsgeräten zu senken, ist unter den bisher üblichen Bedingungen keinesfalls sinnvoll, vielmehr wegen der Investitions- und Betriebskosten sogar abzulehnen. Bei zu geringer Lüfterleistung wird das Ziel für den Radonschutz nicht erreicht, bei zu hoher Lüfterleistung können nicht vertretbare Nebenwirkungen entstehen.

Die Verhaltensweise bei Lüftungs- und somit auch bei Wärmerückgewinnungsgeräten ist in der Praxis davon geprägt, dass bei Möglichkeit der Einflussnahme durch den Nutzer
- die Luftmenge minimiert wird, um trockene Luft zu vermeiden;
- der Lüfter sogar abgeschaltet wird, um Energiekosten beim Lüfter zu sparen;
- die Luftgeschwindigkeit klein gehalten wird, um deren Geräusche (vor allem bei Ruhe nachts im Schlafzimmer) auszuschalten. Jeder Gedanke an eine auch nur geringe Erhöhung der Luftmenge ist damit abwegig.

Erst die im Jahr 2005 auf dem Weltmarkt sich zuspitzende Energiesituation, die in jüngster Zeit stark zunehmenden Aktivitäten auf dem Gebiet der Passivhaustechnik und insbesondere die Bearbeitung von Paul (a.a.O.) waren Anlass zu weiteren Überlegungen. Es war wegen der vorgeprägten Meinung zum aktiven und passiven Radonschutz somit nicht nahe liegend, zuerst mit Wärmerückgewinnungsgeräten planmäßigen Radonschutz vorzunehmen.

Der Erfindung liegt die Aufgabe zugrunde, ein Verfahren zur Minderung der Gefährdung durch gefährliche Gase in Aufenthaltsräumen mit einem Lüftungsgerät zu entwickeln, bei dem die Bedingungen für Wärmerückgewinnungsgeräte planmäßig so ausgestaltet werden können, dass deren vorteilhaften Eigenschaften bei ihrem künftigen Einsatz gewahrt bleiben und ein ausreichender Schutz vor gefährlichen Gasen unter Berücksichtigung hygienischer und ökonomischer Anforderungen erfüllt wird.

Erfindungsgemäß wird die Aufgabe durch den Hauptanspruch gelöst. Ausgestaltungen sind in den Unteransprüchen dargestellt.

Die Erfindung wird nachstehend an Hand von Ausführungsbeispielen näher erläutert.

Durch den Einsatz eines Warmerückgewinnungsgerätes mit hoher Rückwärmezahl bei vorhandener bzw. zu erwartender Schadstoffbelastung, insbesondere Radon aus allen Radonquellen (Baugrund, Baumaterialien, Wasser und Außenluft) für einen Raum mit vorzugebender Luftwechselrate und Nutzungsbedingung wird nachgewiesen, dass eine bestimmte schädliche Gaskonzentration im Raum nicht überschritten wird. Ein Wärmerückgewinnungsgerät hat eine sehr hohe Rückwärmezahl, vorzugsweise über 80 %. Damit sinkt die Rückwärmezahl selbst bei stärker steigendem Luftdurchsatz im Gerät nur unmaßgeblich: bei einer möglichen Rückwärmezahl von 95% sinkt sie bei 2- bzw. 3fach höherer Luftwechselrate nur auf 90% bzw. 86%.

Eine beliebig höhere Luftwechselrate ist auch hier nicht einfach möglich, da die stets begleitenden Randbedingungen einzuhalten sind wie steigende Luftgeschwindigkeit, Strömungsgeräusche an Austrittsöffnungen bzw. durch Ventilator. (Paul a.a.O.).
Eine hohe Rückwärmezahl ist somit notwendig, aber nicht hinreichend.

### Radonzufluss [Bq/s]

Die Radonbelastung wird dadurch ermittelt, dass nicht von gemessenen Radonkonzentrationen [Bq/m³] im Boden und im Raum ausgegangen wird, sondern von der Radonproduktion [Bq/(kgs)] des Bodenmaterials und dessen Eintrittsbedingungen ins Gebäude bzw. der Radonexhalation [Bq/(m²s)] aus den Baumaterialien.

Ausschließlich mit diesen Materialkennwerten wird es möglich, dass unterschiedliche Szenarien des Zuflusses von Radon, insbesondere aus dem Boden, in die Berechnung und weitere Entscheidungsfindung eingehen können.

Berechnung der Radonkonzentration unter Berücksichtigung der Luftwechselrate.
Für den rechnerischen Nachweis mit Modellen des Radondurchgangs durch Baustoffe, Radonaustritt aus den Baustoffen und Einhalten der zulässigen Radonkonzentration bei vorgegebener (Mindest-) Luftwechselrate im Raum können für
- Vorplanungen Referenzräume bzw. Referenzgebäude bzw.
- konkrete Objekte die tatsächlichen Raum- und Nutzungsbedingungen, Wanddicken, Gebäudehöhen, Standort- und Geländesituation usw. angesetzt werden. Damit ergibt sich eine deutlich höhere Planungssicherheit gegenüber den bisher bekannten Möglichkeiten zur Bestimmung der Radongefährdung.

### Feuchteausgleich

Bei höherer Luftwechselrate wird ein Absinken der Luftfeuchte durch deren Zurückhalten im Wärmerückgewinnungsgerät selbst oder durch Feuchteausgleich im Raum vermieden. Damit entfallen die nachteiligen Belastungen infolge trockener Raumluft im Winter. Dieser Punkt hat keinen Einfluss auf die Radonkonzentration, muss aber aus hygienischen Anforderungen erfüllt werden: Ausschluss von Nebenwirkungen.

### Kostenoptimierung

Mit der gezielten Minderung der Radonkonzentration durch eine beschränkt höhere Luftwechselrate mit einem Wärmerückgewinnungsgerät ist es möglich, dass bei
a) geringer bis mittlerer Radonbelastung das Wärmerückgewinnungsgerät allein ausreicht,
b) hoher Radonbelastung ein bautechnischer Radonschutz ergänzend hinzukommt,
c) hoher Radonbelastung der bautechnische Radonschutz durch das Wärmerückgewinnungsgerät minimiert bzw. erst gesichert wird.

Damit können die Kosten minimiert werden. Es kann sogar der Effekt eintreten, dass durch die Gewährleistung des Radonschutzes mittels eines Wärmerückgewinnungsgerätes bei Rentabilitätsberechungen über längere Zeit mit noch steigenden Energiepreisen die Kosten absolut sinken werden, was ohne Wärmerückgewinnungsgeräte sonst nicht der Fall wäre.

### Ausführungsbeispiel 1

Für eine Wohnung im Erdgeschoss ohne Unterkellerung gelten folgende Ausgangswerte:
- 72 m²: gesamte Wohnfläche mit 2,7 m Raumhöhe
- 40 m²: 3 Räume, Türen offen, miteinander ständiger Luftaustausch
- 20 cm: dicke Bodenplatte, mit Dichtbahn und Fußbodenaufbau (keinerlei Konvektion)
- 20 m³/h: hygienisch notwendige Luftmenge für 1 Person
- 0,19 h⁻¹: erforderlicher Luftwechsel bei Nutzung von 1 Person
- 0,38 h⁻¹: dito, bei 2 Personen
- 100 Bq/m³: Zielwert für die Radonkonzentration in der Raumluft
- 15 Bq/m³: Radonkonzentration in der Außenluft
- 10 Bq/(m²h): angesetzte mittlere Radonexhalationsrate aus Baustoffen; Varianten (s. unten): 5 bzw. 15 Bq/(m²h)
- 100 kBq/m³: Radonsättigungskonzentration unter Bodenplatte; Varianten (s. unten): 30 bzw. 300 kBq/m³
- 1s: Standardabweichung als Sicherheitsfaktor

Auf eine detaillierte Darstellung des Berechnungsganges für die obigen und nachfolgenden Ergebnisse, die Ableitung der Berechnungstormein und Modellbeschreibung für die sich einstellende Radonkonzentration im Raum bei verschiedenen Exhalationsraten und Luftwechsetraten wird nicht eingegangen. Sie können für den Fachmann auf diesem Fachgebiet als bekannt vorausgesetzt werden, er kann sie ohne weiteres ausführen (Beispiel hierzu: Schutz H., Hermann E., Höppner J., Löbner W.: Bewertung des Radonrisikos von Baustandorten. In: Forschung zum Problemkreis "Radon". Vortragsmanuskripte des 17, Statusgespräches. Berlin 14./15. Okt. 2004. BMU Bonn, Januar 2005).
Fall 1: Basis sind die vorgenannten Ausgangswerte
   Gemäß Berechnungsmodell (wie erwähnt hier nicht dargestellt) ist eine Luftwechselrate von n = 0,29 h⁻¹ erforderlich, damit die zulässige Radonkonzentration eingehalten werden kann.
   Wird die Wohnung nur von 1 Person genutzt, dann wäre der hygienische Frischluftbedarf mit 20 m³/h ausreichend. Die Radonkonzentration würde aber unzulässig bis auf 140 Bq/m³ ansteigen.
   Mit einem Wärmerückgewinnungsgerät kann die Luftmenge leicht auf n = 0,30 h⁻¹ erhöht werden, damit die Radonkonzentration max. bei 100 Bq/m³ liegt. Der Normalbereich für die Luftwechselrate liegt bei etwa n = 0,3 bis 0,4 h⁻¹, er wird nicht darüber hinaus beansprucht.
   Der Radonschutz wird lüftungstechnisch erfüllt.
   Bautechnische Schutzmaßnahmen sind nicht erforderlich.
   Bei einer Nutzung von 2 und mehr Personen besteht kein Problem durch Radon. Die hygienisch erforderliche Luftmenge ist auch hierfür ausreichend.
Fall 2: Änderungen zu Fall 1: Exhalationsrate 5 Bq/(m²h), Holzhaus, Sättigungskonzentration 30 kBq/m³
   Hierfür ist eine Luftwechselrate von n = 0,15 h⁻¹ für die zulässige Radonkonzentration erforderlich.
   Wird die Wohnung nur von 1 Person genutzt, dann ist der hygienische Frischluftbedarf von 20 m³/h ausreichend, damit die Radonkonzentration max. bei 100 Bq/m³ liegt.
   Die niedrigere Exhalationsrate ist bei Holzhäusem möglich (Nachweis ist notwendig). Damit ist kein bautechnischer oder lüftungstechnischer Radonschutz erforderlich. Empfehlung: Wegen weiterer Vorteile ist nicht nur aus energetischen und ökonomischen Gründen dennoch ein Wärmerückgewinnungsgerät anzuraten.
Fall 3: Änderungen zu Fall 1: Bodenplatte d = 10 cm, Sättigungskonzentration 300 kBq/m³, Exhalationsrate 15 Bq/(m²h), Massivhaus in bergiger Region
   Hierfür ist eine Luftwechseltate von n = 0,52 h⁻¹ erforderlich, damit die zulässige Radonkonzentration eingehalten werden kann.
   Wird die Wohnung von 2 Personen genutzt, dann wäre der hygienische Frischluftbedarf von 40 m³/h ausreichend. Die Radonkonzentration würde unzulässig bis auf 139 Bq/m³ ansteigen. Bei einer Person mit 20 m³/h ergeben sich 237 Bq/m.
   Erst bei Nutzung von 3 Personen ist durch die hygienisch erforderliche Luftmenge auch der Radonschutz abgesichert. Da eine vollwertige Nutzung jedoch auch für nur eine Person abzusichern ist, ist letztlich deren Bemessungsfall maßgebend.
   Schlussfolgerung: Mit einem Wärmerückgewinnungsgerät kann die Luftmenge noch ausreichend erhöht werden, damit die Radonkonzentration max. bei 100 Bq/m³ liegt. Wegen der hohen Radonkonzentration im Boden und unter Beachtung weiterer Konstruktionsdetails (hier nicht näher berücksichtigt) sind passive bautechnische Schutzmaßnahmen abzuwägen. Die Dichtheit der Bodenplatte muss auf jeden Fall gesichert sein.

Aus den drei Beispielen deutet sich an, dass bei dichten Bodenplatten (ohne jegliche Konvektion) weniger die Radonkonzentration im Boden, vielmehr die Exhalationsrate der Baustoffe dominiert. Dies gilt jedoch nicht, sobald anteilig eine konvektive Radonlast aus dem Boden hinzukommt.

Mit diesen Beispielen wird ersichtlich, dass es durchaus Sinn macht, erst mit einem Wärmerückgewinnungsgerät den Radonschutz zu erfüllen und ihn dann gegebenenfalls bautechnisch zu ergänzen. Damit wird die bisherige Herangehensweise infrage gestellt: "Aktive Lüftungssysteme sollten immer erst in einer zweiten Stufe eingerichtet werden, wenn passive Systeme keinen genügenden Erfolg erbracht haben."( Gesetz zum Schutz vor Radon beim Aufenthalt in Gebäuden. Entwurf zum Radonschutzgesetz vom 15.06.04, Blatt 4-20). Die eingangs genannten Probleme mit Lüftungsmaßnahmen können damit entkräftet werden, wenn bestimmte Voraussetzungen erfüllt werden.

## Patentansprüche

1. Verfahren zur Minderung der Gefährdung durch gefährliche Gase in Aufenthaltsräumen mit einem Lüftungsgerät **dadurch gekennzeichnet, dass** ein Wärmerückgewinnungsgerät mit hoher Rückwärmezahl gewählt wird, Objekt-, Nutzungs- und Standorteinflüsse auf die Belastung erfasst werden, der Zufluss pro Zeiteinheit der gefährlichen Gase ermittelt wird, für einen Zielwert der Gaskonzentration bei Vorgabe der Luftwechselrate mit einem Berechnungsmodell vorrangig der lüftungstechnische Schutz auf Basis der normalen bautechnischen Grundsubstanz und ohne nachteilige Nebenwirkungen optimiert wird.

2. Verfahren nach Anspruch 1 **dadurch gekennzeichnet, dass** das Wärmerückgewinnungsgerät eine Rückwärmezahl bei bzw. über 80% hat.

3. Verfahren nach Anspruch 1 oder 2 **dadurch gekennzeichnet, dass** das Wärmerückgewinnungsgerät über eine Leistungsreserve für eine abschätzbare höhere Gaskonzentration verfügt.

4. Verfahren nach einem der Ansprüche 1 bis 3, **dadurch gekennzeichnet, dass** die Gefährdung insbesondere durch radioaktive Gase wie Radon, Thoron bzw. deren Folgeprodukte erfolgt.

5. Verfahren nach einem der Ansprüche 1 bis 4, **dadurch gekennzeichnet, dass** die Gefährdung durch Modelle berechnet wird, wobei Standortcharakteristika, Funktions-, Nutzungs-, Gründungs- und Materialkennwerte einbezogen werden.

6. Verfahren nach einem der Ansprüche 1 bis 5, **dadurch gekennzeichnet, dass** durch das Berechnungemodell ermittelt werden kann, ob bzw. durch welche Einflussfaktoren insbesondere eine Gefährdung besteht und damit Schutzmaßnahmen besser ausgewählt werden können.

7. Verfahren nach einem der Ansprüche 1 bis 6, **dadurch gekennzeichnet, dass** die Schutzwirkung durch andere Schutzmaßnahmen wie funktionelle und/oder bautechnische und/oder lüftungstechnische Schutzmaßnahmen ergänzt wird.

8. Verfahren nach einem der Ansprüche 1 bis 7, **dadurch gekennzeichnet, dass** es andere Schutzmaßnahmen in ihrer Wirkung ergänzt.

9. Verfahren nach einem der Ansprüche 1 bis 8, **dadurch gekennzeichnet, dass** es andere Schutzmaßnahmen in ihrem Aufwand reduzieren kann, damit deren Umfang bzw. Aufwand verringern hilft und somit eine Optimierung möglich ist.

10. Verfahren nach einem der Ansprüche 1 bis 9, **dadurch gekennzeichnet, dass** der Luftfeuchteabfluss infolge Luftaustausch mit der Außenluft ausgeglichen wird.

11. Verfahren nach einem der Ansprüche 1 bis 10, **dadurch gekennzeichnet, dass** die Schutzwirkung auf mehrere Räume, Raumgruppen bzw. ganze Gebäude erfolgt.

12. Verfahren nach einem der Ansprüche 1 bis 11, **dadurch gekennzeichnet, dass** die Schutzwirkung mit mehreren Wärmerückgewinnungsgeräten erfolgt.

13. Verfahren nach einem der Ansprüche 1 bis 12, **dadurch gekennzeichnet, dass** bei der Ermittlung bzw. bei Nutzung von Kennwerten der Exhalation aus den Baustoffen der Falschlufteinfluss in der Messvorrichtung berücksichtigt wurde und weiterhin Baustoffkennwerte wie Schichtdicke, Dichte, Poren- und Feuchtegehalt beachtet werden.

14. Verfahren nach einem der Ansprüche 1 bis 13, **dadurch gekennzeichnet, dass** bei der Berechnung mit dem Modell-radiometrische Kennwerte wie effektive spezifische Radiumaktivität a_{eff} [Bq/kg] und Diffusionskonstanten D [m²/s] für den Gasdurchgang durch Baustoffe und die Exhalation aus Baustoffen zugrunde gelegt werden.

15. Verfahren nach einem der Ansprüche 1 bis 14, **dadurch gekennzeichnet, dass** der Radonzufluss aus dem Boden ins Gebäude auf Grundlage der Radonsättigungskonzentration mittels der Radonproduktion [Bq/(kgs)] aus der/den maßgebenden Bodenschicht(en) in die Berechnung eingeht.
